# EUROPEAN PATENT SPECIFICATION

(11) **EP 3 574 761 B1**
(45) Date of publication and mention of the grant of the patent: **21.04.2021**
(21) Application number: 19177669.9
(22) Date of filing: 31.05.2019
(51) Int. Cl.: A21C 5/02, A21C 9/08, B65G 47/248

(54) **TURNING DEVICE, AS WELL AS METHOD, FOR ALTERNATELY TURNING FLAT BAKING PRODUCTS**
DREHVORRICHTUNG, SOWIE VERFAHREN, ZUM ABWECHSELNDEN WENDEN VON FLACHEN BACKPRODUKTEN
DISPOSITIF, AINSI QUE PROCÉDÉ POUR TOURNER ALTERNATIVEMENT DES PRODUITS DE CUISSON PLATS

(30) Priority: 30.05.2018 NL 2021021
(43) Date of publication of application: 04.12.2019
(73) Proprietor: B.V. Machinefabriek Houdijk, 3133 KS Vlaardingen (NL)
(72) Inventor: DE VETTE, Bart Johannes, 3133 KS VLAARDINGEN (NL)
(74) Representative: Algemeen Octrooi- en Merkenbureau B.V.

(56) References cited:
- CA-A1- 3 032 626
- GB-A- 1 487 591
- GB-A- 1 549 145
- GB-A- 2 312 410
- US-A- 3 762 306
- US-B2- 7 926 643

## Description

The present invention relates to a turning device, as well as a method, for alternately turning flat baking products.

A turning device for turning flat baking products is known from the prior art. Such a device is used in particular for producing cookies consisting of an upper portion, a similar or different lower portion, and a layer of edible material provided between the upper and lower portion.

Often, the upper and lower portion are processed on one side thereof, such as, for example, with a print, or with a certain relief, while the opposite side of the upper and lower portion are not processed. In that case, it is generally desirable to produce a cookie with the processed sides facing away from each other, while the un-processed sides are facing each other. As a result it is important, during the production of such cookies, to orient the upper and lower portions so that they can be stacked accordingly.

A device for this is known from document NL1035879 which was filed by the applicant. The device has a supply transport belt and a lower discharge transport belt. Between the supply conveyor belt and the discharge conveyor belt, a number of metal chutes arranged parallel to each other are arranged. Each of the chutes has a flat slide surface and two edges that extend upwards along the slide surface. To turn flat baking products, some of the chutes comprise a fixed turning narrowing between the first and second edge. The turning narrowing of the mentioned chute causes each cookie that slides through it to turn

GB 2 312 410 A discloses a biscuit inverter mechanism.

For the production of a cookie with the aid of this device according to the prior art, at least two sliding chutes are used, namely; one with a turning narrowing, and one without a turning narrowing. After a cookie portion has passed through each of these sliding chutes, two parallel rows are formed on the discharge conveyor, namely; one row with turned cookie portions, and one row with non-turned cookie portions.

Before the cookie portions are stacked at a stacking device, the cookie portions of one row are combined with those of the other row. For this purpose, a positioning device with a rotating pick roller and two positioning rollers is arranged above the discharge conveyor belt. The pick roller is provided with a number of pins extending from the periphery of the pick roller for positioning the cookie portions such that there is always a similar distance between adjacent cookie portions in the row. By changing the rotation speed of the pick roller, it is possible to adjust the distance between the cookie portions, or the pitch of the cookie portions, on the discharge conveyor belt before the cookie portions are brought to the stacking device.

Downstream of the pick roller and above the discharge conveyor, the two positioning rollers are arranged one behind the other, wherein at least one of the positioning rollers is movable in the axial direction. The positioning rollers together position the products in length and transverse direction such that, viewed from the transverse direction, rows with alternately turned and non-turned cookie portions are formed. After the cookie portions are positioned in such rows, the cookie portions can be brought to the stacking device.

A drawback of the prior art is that the production process of the flat baking products is relatively complicated. The cookie portions need to be accurately positioned on the discharge conveyor belt with the aid of the positioning device before the cookie portions can be brought to the stacking device, such that the stacking device can stack the cookie portions one after the other sufficiently.

It is an object of the present invention to provide a device in which the production process is less complicated.

The object is achieved with a turning device for alternately turning flat baking products, comprising:
- a transporting means having a transporting direction, for transporting a plurality of flat baking products in the transporting direction, wherein each of the plurality of flat baking products comprises a first main surface, and an oppositely located second main surface, and wherein the plurality of flat baking products are configured in a row wherein the longitudinal direction of the row is aligned with the transporting direction;
- a positioning means for bringing the first main surface of each of said plurality of flat baking products from a substantially horizontal starting situation to a substantially vertical tilting position, wherein each of said plurality of flat baking products rotate about a rotation axis that is parallel to the transporting direction of the transporting means;
further comprising:
- a tilting means for alternately tilting, by means of an active thrust to be applied against the first main surface from a direction transverse to the transporting direction, said plurality of flat baking products arranged in the row from the tilting position to an end situation in which the flat products arranged in the row are successively directed downwards with the first main surface and the second main surface, such that the flat baking products arranged in the row are alternately turned with respect to the starting situation.

With the turning device according to the invention, it is possible to tilt the flat baking products in the row with the aid of the tilting means, wherein the position of the cookie portions in the row with respect to each other is changed relatively little. This makes it possible to provide a turning device that is free from an additional positioning device, wherein the flat baking products in the row can be brought directly towards a stacking device. This makes the production process less complicated.

Within the context of this document, with a "rotation axis" is meant; an axis extending parallel to the transporting direction of the transporting means. The rotation axis is preferably aligned with the transport direction.

The transporting direction of the transporting means is the direction in which the flat baking products are transported through the turning device from the starting situation to the end situation. The transporting direction, and therefore also the rotation axis, can be linear. However, it is also possible that curves are present in the transporting path, as a result of which the direction of the transporting direction changes. In the latter case, the axis of rotation follows the transporting direction.

Within the context of this document with "flat baking products" is meant; a baked product with a substantially flat first main surface, an oppositely located substantially flat second main surface, and an circumferential edge that connects the first main surface with the second main surface, such as, a cookie, or a biscuit, or a slice of bread, or a rusk.

Within the context of this document with "alternate turning" is meant; the turning of the plurality of flat baking products in a row, wherein a pattern of flat baking products in the row is created, wherein successively one flat baking product has its first main surface directed downwards and a following flat baking product has its second main surface directed downwards. The term can also be understood to mean other patterns, such as for example, a plurality of baking products in a row, wherein two flat baking products are successively directed downwards with the first main surface thereof and the subsequent two flat baking products are directed downwards with the second main surface thereof, or a plurality of baking products in a row, wherein the first main surface of three flat baking products in the row is directed downwards and the second main surface of three subsequent flat baking products is directed downwards, etc.

Embodiment of the present invention are described below.

In an embodiment the transporting means further comprises:
- a plurality of transporters for transporting the plurality of flat baking products in the transporting direction;
- a control means for individually controlling the transporters, wherein the velocity of the transporters is adaptable independently of each other.
An advantage of this embodiment is that the flat baking products can be transported through the turning device, and potentially by means of the transporters of the turning device to the stacking device, independently of each other. As such it is possible to adjust the distance between the flat baking products in the row with respect to each other, wherein the flat baking products to be stacked can be, for instance, transported closer to each other, or to adjust the feed of the flat baking products to the stacking machine wherein it is easier for the stacking device to stack the flat baking products.

In an embodiment the (transporting means of the) turning device is provided with a transporting path for driving the transporters along the transporting path.

Within the context of this document, with such transporters that can be controlled independently of each other is meant a linear motor system. Such a system provides a transporting path that can be designed as a finite track and forms one of the two electromagnetic parts of the motor system. The other part is formed by the transporters or motor units that travel along this path. This traveling can be controlled separately, so that each transporter can be adjusted individually in speed, acceleration and position. Preferably the transporters are provided with one or more push elements or pushers or with one or more transporters. The invention provides in an example a transporter with 1, 2 or more transporters and/or push elements, and/or support elements. These support elements do not have a drive function but only serve to support the products to be transported. In one example, the carrier(s) and/or pusher(s) may be arranged to clamp individual products or groups of products before transporting them. For example, groups of turned and not-turned products can be transported as a group towards a further process step.

In an embodiment the transporters are arranged for engaging the flat baking products from a side. With this is meant that the flat baking products are engaged from a direction transverse to the transporting direction and at the height of the transporting surface. An advantage of this embodiment is that when the flat baking products of the transporters have to be transferred to a further transporter, an arrangement can be achieved that takes up relatively little space.

In an embodiment the transporters are arranged for engaging the flat baking products from above. An advantage of this embodiment is that a relatively simple arrangement of the transporters can be provided.

In an embodiment the transporters are arranged to engage the flat baking products stream upwards of the positioning means. Here, the transporters are adapted for transporting the flat baking products upstream of the positioning means along, i.e. through, the positioning means in the transporting direction. An advantage of this embodiment is that it is possible to adjust the pitch between the flat baking products at the location of the positioning means.

In an embodiment the transporters are arranged to engage the flat baking products stream downwards of the tilting means. Here, the transporters are adapted to transport the flat baking products along the tilting means in the transporting direction. Preferably the flat baking products are also transported to a stacking device by means of the transporters. An advantage of this embodiment is that it is possible to compensate for any changes in the pitch between the flat baking products as a result of tilting by the tilting means.

In an embodiment the transporters are arranged to transport the flat baking products along the positioning and the tilting means. An advantage of this embodiment is that it is possible to adjust the pitch between the flat baking products at the positioning means and the tilting means.

In an embodiment the device further comprises a first and a second support member, that extend in the transporting direction, for supporting the flat baking products between the first and second support member, between the tilting position and the end situation. An advantage of this embodiment is that the flat baking products can be supported in a relatively easy way, while the flat baking products are transported through the device.

In an embodiment the transporting means comprises a transporting surface for transporting the plurality of flat baking products over the transporting surface along the rotation axis. An advantage of this embodiment is that the flat baking products can be easily be supported.

In an embodiment the first and second support member comprise a top plane, wherein a distance is formed between the top plane and the transporting surface, and wherein the distance decreases until at the end situation, wherein the plurality of flat baking products in the end situation are free from support by the first and second support member. An advantage of this embodiment is that the flat baking products can be guided gradually from the tilting position towards the end situation, wherein the risk of damage is relatively small.

According to the present invention the tilting means comprises an air stream means having a nozzle for tilting the plurality of flat baking products by means of an air stream. An advantage of this embodiment is that the flat baking products can be tilted in such a way that the risk of damage, for instance, by physical contact with the flat baking products is limited.

In an embodiment the nozzle of the air stream means is arranged at the tilting position, and the nozzle is arranged at a distance from the transporting surface that is greater than the distance between the top plane of the first support member and the transporting surface. In this case, the first and/or second support member is configured such that the flat baking products supported by the first support member extend farther from the transporting surface than the first and/or second support member. By positioning the nozzle of the air stream means above the first support member, it is relatively easy to tilt the flat baking product at the tilting position.

According to a second aspect of the present invention, the invention provides a method for alternately turning flat baking products, comprising the steps of:
- transporting, in the transporting direction, a plurality of flat baking products configured in a single row, wherein each of the plurality of flat baking products comprises a first main surface, and an oppositely located second main surface;
- bringing the first main surface of the flat baking products from a substantially horizontal starting situation to a substantially vertical tilting position;
- tilting the flat baking products about a rotation axis that extends parallel with respect to the transporting direction;
wherein the step of tilting is performed in such a manner that the flat baking products are alternately tilted, by means of an active thrust to be applied to the first main surface from a direction transverse to the transporting direction, from the tilting position to an end situation in which the flat baking products arranged in the row are successively directed downwards with the first main surface and the second main surface, such that the flat baking products in the row are alternately turned with respect to the starting situation.

Advantages of the second aspect correspond to those of the turning device in accordance with the present invention.

In an embodiment according to the second aspect of the invention the step of tilting is performed in such a manner that the flat baking products in the row are alternately tilted to the end situation in which successively two flat baking products are directed downwards with the first main surface and the following two flat baking products are directed downwards with the second main surface, or wherein successively three flat baking products are directed downwards with the first main surface and the following three flat baking products are directed downwards with the second main surface.

An advantage of this embodiment is that a variety of stacking devices can be provided with flat baking products.

### Figure description

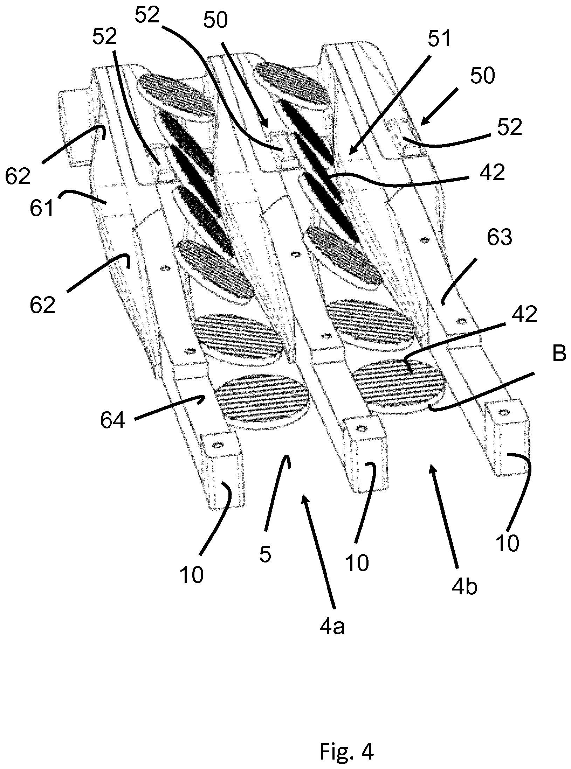

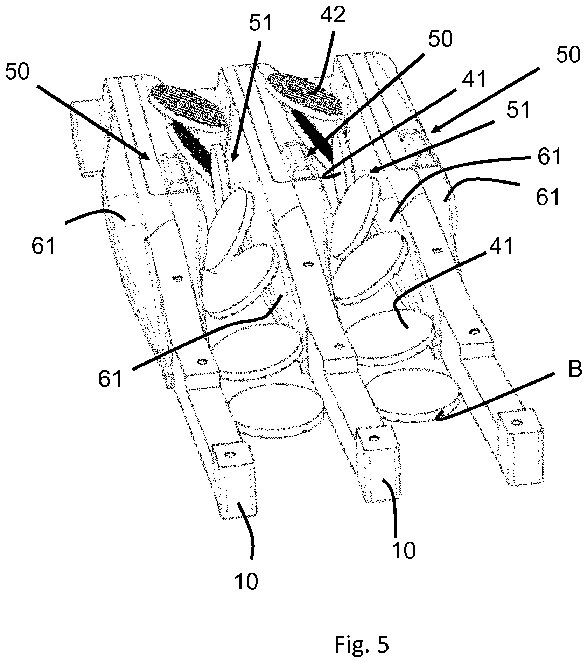

In the following, the present invention will be further elucidated with reference to an embodiment of a device according to the present invention, shown in the drawings, in which:
Fig. 1 shows a perspective view of the turning device according to the present invention;
Fig. 2 shows a side view of the turning device of Figure 1;
Fig. 3 shows a top view of the turning device of Figure 1;
Fig. 4 shows a perspective view of an embodiment of a positioning means and a tilting means according to the present invention with a plurality of flat baking products that maintain their original orientation;
Fig. 5 shows a perspective view of the embodiment, according to Figure 4, of a positioning means and a tilting means according to the present invention having a plurality of flat baking products that are being turned by the tilting means.

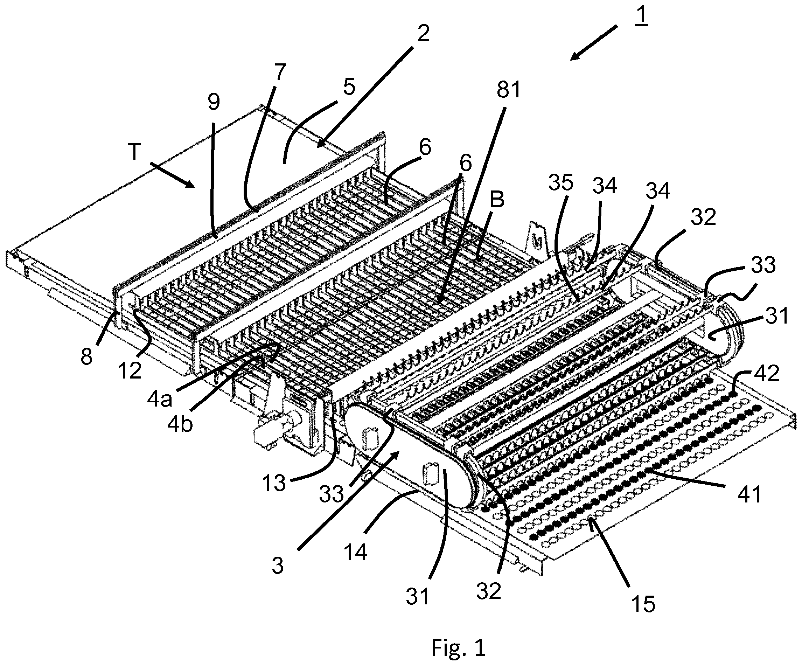

Figure 1 shows a perspective view of a turning device 1 according to the present invention. The turning device 1 is provided with:
   - a transporting means 2, 3 with a transporting direction T, for transporting a plurality of flat baking products B in the transporting direction T, wherein each of the plurality of flat baking products B is provided with a first main surface 41 and a second main surface 42, that is located opposite to the first main surface 41, and the plurality of flat baking products B are arranged in a row 4a, 4b wherein the longitudinal direction of the row 4a, 4b is aligned with the transporting direction T;
   - a positioning means 61 (Figure 4, 5) for bringing the first main surface 41 of the flat baking products B from a substantially horizontal starting situation to a substantially vertical tilting position 51, wherein the flat baking products B rotate about an axis of rotation parallel to the transport direction T of the transport means 2, 3; further comprising:
   - a tilting means 50 for tilting the flat baking products B located in the row 4 by means of an active thrust to be applied to the first main surface 41 from a direction transverse to the transporting direction T from the tilting position 51 to an end situation, wherein the flat baking products B located in the row 4 are successively facing downwards with the first main surface 41 and the second main surface 42, such that the flat baking products B located in the row 4 are alternately turned with respect to the starting situation.

The flat baking products B are supplied in the direction of the positioning means 61 with the aid of an endless conveyor belt 2. The conveyor belt 2 is driven by a drive unit not visible in the figures. The conveyor belt 2 has a conveyor belt surface 5. This conveyor belt surface 5 is of the closed type. However, it is also possible that the conveyor belt surface 5 has a plurality of openings through which residue from the conveyor belt surface 5 can be discharged. For example, it is possible that the conveyor belt surface 5 is formed by a plurality of chains, or lines spaced apart in the transverse direction with respect to the transporting direction T.

A frame 7 is arranged above the conveyor belt surface 5. The frame 7 comprises a number of securing members 8 which are attached to the frame of the conveyor belt 2, and two transverse beams 9 extending in a direction transverse to the transporting direction T. A number of support members in the form of guides 6 are mounted to the transverse beams 9. The guides 6 are located at the conveyor belt surface 5, wherein the conveyor belt 2 is movable freely from the guides 6. The guides 6 are suitable for guiding the flat baking products B in rows 4a, b that are transported over the conveyor belt surface 5.

Upstream of the positioning means 61, a buffer area 81 with a dosing roller 82 is provided for collecting a plurality of flat baking products B in rows 4a, b. The dosing roller is used to subsequently uniformly dose the cookie portions in the rows in the transporting direction T. This makes it possible to correct any ununiformities in distances between the flat baking products B in the row 4a, b, for example, caused by the transport means 2, so that the flat baking products B can be transported close to each other along the positioning means 61 and the tilting means 50 , after which the transport means 3 can engage the flat baking products B evenly, viewed from a row, one by one.

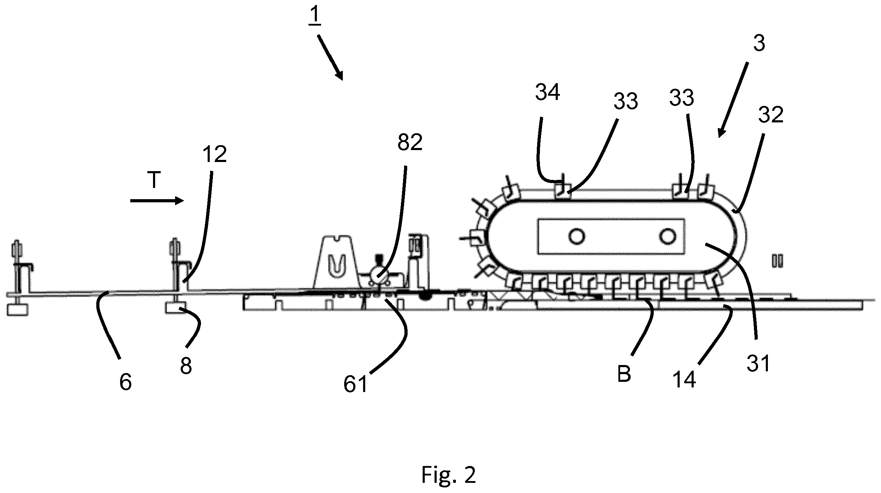

As can be seen in Figures 1 and 2, the guides 6 extend in the transporting direction T between an upstream portion 12 and a downstream portion 13. Downstream of portion 13 of the guides, a positioning means 61 and a tilting means 50 are located.

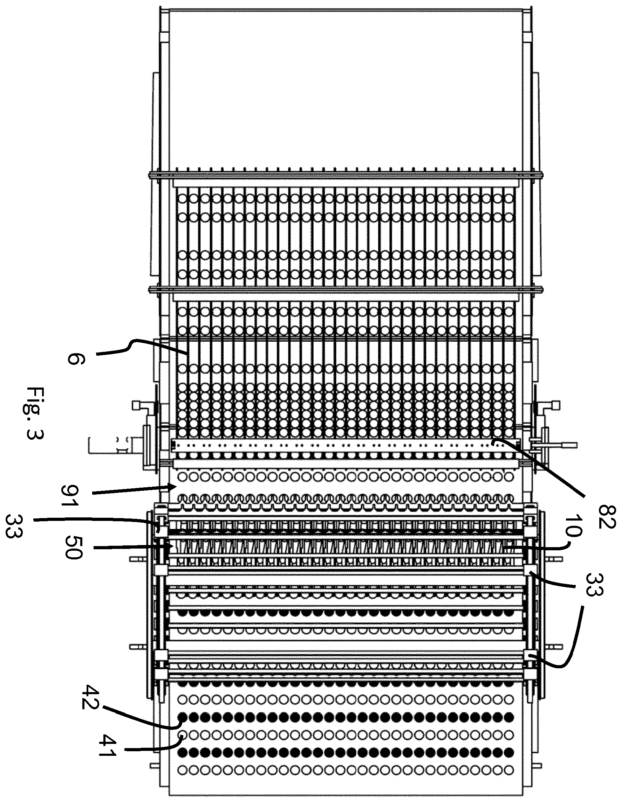

In Figure 3 it can be seen that the guides 6 end at the location of a transition region 91, after which the flat baking products B are taken over by the transport means 3 and are further transported in the transport direction T. The transporting means 3 transports the flat baking products B along further supporting members, designed as guides 10, at the location where the positioning means 61 and the tilting means 50 are arranged. However, it is also possible for the guides 6 and the guides 10 overlap into each other.

It can be seen in Figure 4 that in each case two guides 6 form a track 4a, b bounding the flat baking products B. At the location of the upstream portion 12, the guides 6 have a rectangular shape and the distance between two guides 6 is at least as large as the diameter of the main surfaces 41, 42 of the flat baking products B, wherein the flat baking products B can be transported free from the guides 6. As a result, the main surfaces 41, 42 of the flat baking products B in the row 4 at the upstream portion 12 are oriented substantially horizontally.

Between the upstream portion 12 and the tilting means 50, a positioning means 61 is provided in the form of a track narrowing 62 of the guides 10 extending to the tilting position 51. It can be seen that each of the guides 10 is provided with a sloping narrowing 62 between the top side 63 of the guides 10 and the transporting surface 5. At the location of the narrowing 62 the guides 10 are arranged such that at least one main surface of the flat baking products B can be load-bearing supported by one of the two guides 10 which together form a boundary of a row 4a, b. Herein, lateral movement of the flat baking products B is prevented by the other of the two guides 10. At the position of the tilting position 51, the guides 10 are arranged such that the first and second main surface 41, 42 of the flat baking products B in the row 4 are substantially vertically oriented.

Downstream of the tilting position 51, the track narrowing 62 formed by the guides 10 gradually decreases, wherein the first and second main surface 41, 42 of the flat baking products B are gradually brought to a horizontal orientation.

The tilting means 50 comprises a nozzle 52 positioned at the location of the tilting position 51 on the upper side 63 of an associated guide 10. The nozzle 52 is coupled through a not visible channel extending through the associated guide 10 to an actuator such as, for example, a pump. The nozzle 52 has an outlet opening directed towards the tilting position 51 for ejecting an air stream in the direction of the tilting position 51. The pump can generate a thrust force against the main surface of a flat baking products B via the channel and the nozzle 52 by means of a gas, such as air, so that the flat baking products B is brought from one guide 10 to the other guide 10, after which the other guide 10 will support the flat baking products B.

In another embodiment, the impact force is applied with the aid of a mechanical thrust element, such as a pin, instead of with the aid of an air flow.

In an embodiment, the tilting means 50 comprises an observer (not shown), such as a sensor, for observing flat baking products in the row, in particular for observing flat baking products at the tilting position 51. The tilting means 50 is herewith arranged for tilting an observed flat baking product at the tilting position 51 based on a flat baking product observed by the observer. For this purpose the tilting means 50 preferably also comprises a control unit which is in communicative connection with the observer and the actuator, for controlling the actuator in dependence of an observation by the observer. This makes it possible to control the actuator on the basis of flat baking products in the row observed by the observer, wherein the pattern of successive flat baking products in the row can be adjusted.

In the embodiment of Figures 4 and 5, the nozzle 52 of the tilting means 50 is arranged at a distance from the transporting surface 5 that is greater than the distance between the top side 63 and the transporting surface 5. However, it is also possible that the opening of the nozzle 52 is positioned between the top side 63 and the transport surface 5.

From the tilting position 51, the flat baking products B are further transported with the aid of transport means 3. The transport means 3 is designed as a linear motor system which is arranged above the bearing surface 15. The linear motor system 3 comprises a control means (not visible), two frames 31 with a peripheral edge 32 arranged along the transporting direction T, and a plurality of transporters 33, or movers, movable along the peripheral edge 32. Each peripheral edge 32 forms a transport path 32 for the plurality of transporters 33, the transporters 33 being coupled to the frame on the basis of an electromagnetic coupling. The transport path 32 extends substantially parallel to the transport direction T.

The control means is adapted to individually control the transporters 33, wherein the speed of the plurality and/or the position of transporters 33 is adjustable independently of each other.

Within the context of this description, with drive means is meant electronics with which the conveyors are driven. That is, in a preferred embodiment, the conveyors are part of a linear motor system. This system preferably consists of various components. These include the motor module, which drives the transporters, as well as the transporters themselves. These transporters are also referred to as movers and are preferably passive. The active part of the motor is preferably included in the motor module and forms the static part of the linear motor system.

The motor module is arranged to apply an alternating magnetic field. This magnetic field attracts or pushes the magnets in the movers. In this way, the movers can be controlled on an individual basis, i.e. per mover or transporter, and move individually in speed and/or position. So regardless of the speed and/or position of the other movers. The movers are preferably provided with brushless electric motors, for example a brushless direct current motor or induction motor. The movers are preferably provided with means for determining the position. This can be achieved by means of a light encoder which either counts the number of light pulses and deduces therefrom where it is located or because it sends an identification signal and the position of that mover can be determined if it passes a fixed reference point.

Preferably the linear motor system also comprises a guide rail. This is a rail that forms, as an infinite loop, a support or guide element that supports and guides the movers over a predetermined track. This guide rail is preferably made of a material with a low friction coefficient. That is, the rail can be provided with a smooth coating, such as a layer of polytetrafluoroethylene or the like. It is also possible that the rail is formed from (hardened) steel or stainless steel, wherein the conveyors can be moved along the rail via roller bearings.

The conveyors are preferably provided with a push or pull element or retaining element. Depending on the position in the total chain of transporters, a transporter can be arranged to push or hold back an individual product or group of products. For example, in an exemplary embodiment, all conveyors are designed with push elements, or alternately with push and hold element. A group of products can then be transported through the system per group consisting of a single push and a single retainer element.

The linear motor system 3 is further provided with a plurality of positioning members 34 extending between the transporters 33 and above the bearing surface 15, wherein a conveyor 33 of the one frame 31 is coupled via the positioning member 34 to an associated conveyor 33 of the other frame 31. The positioning members 34 are designed as an elongated bar, with a number of protrusions 35. The flat baking products are moved by means of the protrusions 35 through the linear motor system 3 over the bearing surface 15 in the transporting direction T.

As can be seen in Figures 1 and 2, the linear motor system 3 extends substantially above the support surface 15. However, it is also possible that the linear motor system 3 is provided below the support surface 15, the support surface 15 being provided with slots extending in the transporting direction T, the protrusions 35 extending through the slots. This makes it possible to provide a relatively compact device.

It is also possible to design the conveyors such that the protrusions engage the flat baking products from the side of each flat baking product. Such an embodiment can be advantageous depending on the transferring of the flat baking products to a further linear motor system, wherein the space for such a system is limited.

In addition, it is not necessary for the linear motor system 3 to be arranged downstream of the tilting means 50. In some embodiments according to the invention, the linear motor system 3 is adapted to engage the flat baking products B at the location of the positioning means 61 and transport them in the transporting direction T, or the linear motor system 3 is even adapted to engage the flat baking products B upstream of the positioning means 61. In the latter case, the conveyor belt 2 can be replaced by a fixed bearing surface, such as a table, and the transporters 33 with the protrusions 35 are adapted to engage the flat baking products B prior to transport along the tilting means 50.

## Claims

1. Turning device (1) for alternately turning flat baking products, comprising
- a transporting means (2, 3) having a transporting direction, T for transporting a plurality of flat baking products B in the transporting direction, wherein each of the plurality of flat baking products comprises a first main surface, (41) and an oppositely located second main surface, (42) and wherein the plurality of flat baking products are configured in a row (4a, 4b) wherein the longitudinal direction of the row is aligned with the transporting direction;
- a positioning means (61) for bringing the first main surface of each of said plurality of flat baking products from a substantially horizontal starting situation to a substantially vertical tilting position, wherein each of said plurality of flat baking products rotate about a rotation axis that is parallel to the transporting direction of the transporting means; further comprising:
- a tilting means (50) for alternately tilting in said row, by means of an active thrust to be applied against the first main surface from a direction transverse to the transporting direction, said plurality of flat baking products arranged in the row from the tilting position to an end situation in which the flat products arranged in the row are successively directed downwards with the first main surface and the second main surface, such that the flat baking products arranged in said row are alternately turned with respect to the starting situation, and wherein said tilting means comprises an air stream means having a nozzle (52) for tilting the plurality of flat baking products by means of an air stream.

2. Turning device in accordance with claim 1, wherein the transporting means further comprises:
- a plurality of transporters (33) for transporting the plurality of flat baking products in the transporting direction;
- a control means for individually controlling the transporters, wherein the velocity of the transporters is adaptable independently of each other; and
- a transporting path (32) for driving the transporters along the transportig path.

3. Turning device in accordance with claim 2, wherein the transporters are arranged for engaging the flat baking products from a side, from a direction transverse to the transporting direction, at the level of the transporting surface.

4. Turning device in accordance with claims 2 or 3, wherein the transporters are arranged for engaging the flat baking products from above.

5. Turning device in accordance with claims 2 to 4, wherein the transporters are arranged to engage the flat baking products stream upwards of the positioning means.

6. Turning device in accordance with claim 2 to 5, wherein the transporters are arranged to engage the flat baking products stream downwards of the tilting means.

7. Turning device in accordance with claims 2 to 6, wherein the transporters are arranged to transport the flat baking products through the positioning and the tilting means.

8. Turning device in accordance with claims 2 to 7, wherein the transporters are arranged to transport the flat baking products through the entire turning device.

9. Turning device in accordance with any of the previous claims, comprising a first and a second support member, (10) that extend in the transporting direction, for supporting the flat baking products, between the first and second support member, between the tilting position and the end situation.

10. Turning device in accordance with any of the previous claims, wherein the transport means comprises a transporting surface for transporting the plurality of flat baking products in the transporting direction along the transporting surface.

11. Turning device in accordance with claim 9, wherein the first and second support member comprise a top plane, (63) wherein a distance is formed between the top plane nd the transporting surface, and wherein the distance decreases until at the end situation, wherein the plurality of flat baking products in the end situation are free from support by the first and second support member.

12. Turning device in accordance with claim 11, wherein the nozzle is arranged at the tilting position at a distance from the transporting surface that is greater than the distance between the top plane of the first support member and the supporting surface.

13. Method for alternately turning flat baking products comprising the steps of:
- transporting, in a transporting direction, a plurality of flat baking products configured in a single row, wherein each of the plurality of flat baking products comprises a first main surface, and an oppositely located second main surface;
- bringing the first main surface of each of said plurality of flat baking products from a substantially horizontal starting situation to a substantially vertical tilting position;
- alternately tilting the flat baking products about a rotation axis that extends parallel with respect to the transporting direction;
- wherein the step of tilting is performed in such a manner that said plurality of flat baking products are alternately tilted, by means of an active thrust to be applied to the first main surface from a direction transverse to the transporting direction, from the tilting position to an end situation in which the flat baking products arranged in the row are successively directed downwards with the first main surface and the second main surface, such that the flat baking products in the row are alternately turned with respect to the starting situation and wherein said tilting means comprises an air stream means having a nozzle for tilting the plurality of flat baking products by means of an air stream.

14. Method in accordance with claim 13, wherein the step of tilting is performed in such a manner that the flat baking products in the row are alternately tilted to the end situation in which successively two flat baking products are directed downwards with the first main surface and the following two flat baking products are directed downwards with the second main surface, or wherein successively three flat baking products are directed downwards with the first main surface and the following three flat baking products are directed downwards with the second main surface.

## Patentansprüche

1. Wendevorrichtung (1) zum abwechselnden Wenden von flachen Backprodukten, Folgendes umfassend:
- eine Transporteinrichtung (2, 3), die eine Transportrichtung T zum Transportieren von mehreren flachen Backprodukten B in Transportrichtung aufweist, wobei jedes der mehreren flachen Backprodukte eine erste Hauptfläche (41) und eine entgegengesetzt angeordnete zweite Hauptfläche (42) umfasst, und wobei die mehreren flachen Backprodukte in einer Reihe (4a, 4b) ausgelegt sind, wobei die Längsrichtung der Reihe mit der Transportrichtung ausgerichtet ist;
- eine Positioniereinrichtung (61), um die erste Hauptfläche jedes der mehreren flachen Backprodukte aus einer im Wesentlichen horizontalen Ausgangsstellung in eine im Wesentlichen vertikale Neigeposition zu bringen, wobei sich jedes der mehreren flachen Backprodukte um eine Drehachse dreht, die parallel zur Transportrichtung der Transporteinrichtung verläuft;
ferner Folgendes umfassend:
- eine Neigeeinrichtung (50), um die in der Reihe angeordneten mehreren flachen Backprodukte mittels eines aktiven Schubs, der gegen die erste Hauptfläche aus einer Querrichtung zur Transportrichtung aufgebracht wird, von der Neigeposition in eine Endstellung, in der die in der Reihe angeordneten flachen Produkte nacheinander mit der ersten Hauptfläche und der zweiten Hauptfläche nach unten geleitet werden, in der Reihe abwechselnd zu neigen, sodass die in der Reihe angeordneten flachen Backprodukte in Bezug zur Ausgangsstellung abwechselnd gewendet werden, und wobei die Neigeeinrichtung eine Luftstromeinrichtung umfasst, die eine Düse (52) aufweist, um die mehreren flachen Backprodukte mittels eines Luftstrahls zu neigen.

2. Wendevorrichtung nach Anspruch 1, wobei die Transporteinrichtung ferner Folgendes umfasst:
- mehrere Transporter (33) zum Transportieren der mehreren flachen Backprodukte in die Transportrichtung;
- eine Steuerungseinrichtung zum individuellen Steuern der Transporter, wobei die Geschwindigkeit der Transporter unabhängig voneinander einstellbar ist; und
- eine Transportstrecke (32), um die Transporter entlang der Transportstrecke zu verfahren.

3. Wendevorrichtung nach Anspruch 2, wobei die Transporter dazu angeordnet sind, von einer Seite aus einer Richtung quer zur Transportrichtung auf Höhe der Transportoberfläche in die flachen Backprodukte einzugreifen.

4. Wendevorrichtung nach Anspruch 2 oder 3, wobei die Transporter dazu angeordnet sind, von oben in die flachen Backprodukte einzugreifen.

5. Wendevorrichtung nach Anspruch 2 bis 4, wobei die Transporter dazu angeordnet sind, vor der Positioniereinrichtung in die flachen Backprodukte einzugreifen.

6. Wendevorrichtung nach Anspruch 2 bis 5, wobei die Transporter dazu angeordnet sind, nach der Neigeeinrichtung in die flachen Backprodukte einzugreifen.

7. Wendevorrichtung nach Anspruch 2 bis 6, wobei die Transporter dazu angeordnet sind, die flachen Backprodukte durch die Positionier- und Neigeeinrichtung zu transportieren.

8. Wendevorrichtung nach Anspruch 2 bis 7, wobei die Transporter dazu angeordnet sind, die flachen Backprodukte durch die gesamte Wendevorrichtung zu transportieren.

9. Wendevorrichtung nach einem der vorstehenden Ansprüche, ein erstes und ein zweites Stützelement (10) umfassend, die sich in Transportrichtung erstrecken, um die flachen Backprodukte zwischen dem ersten und zweiten Stützelement, zwischen der Neigeposition und der Endstellung abzustützen.

10. Wendevorrichtung nach einem der vorstehenden Ansprüche, wobei die Transporteinrichtung eine Transportfläche zum Transportieren der mehreren flachen Backprodukte in Transportrichtung entlang der Transportfläche umfasst.

11. Wendevorrichtung nach Anspruch 9, wobei das erste und zweite Stützelement eine obere Ebene (63) umfassen, wobei ein Abstand zwischen der oberen Ebene und der Transportfläche ausgebildet ist, und wobei der Abstand bis zur Endstellung zunimmt, wobei die mehreren flachen Backprodukte in der Endstellung nicht mehr vom ersten und zweiten Stützelement getragen werden.

12. Wendevorrichtung nach Anspruch 11, wobei die Düse an der Neigeposition in einem Abstand zur Transportfläche angeordnet ist, der größer ist als der Abstand zwischen der oberen Ebene des ersten Stützelements und der Stützfläche.

13. Verfahren zum abwechselnden Wenden flacher Backprodukte, die folgenden Schritte umfassend:
- Transportieren mehrerer in einer einzelnen Reihe ausgelegter flacher Backprodukte in eine Transportrichtung, wobei jedes der mehreren flachen Backprodukte eine erste Hauptfläche und eine entgegengesetzt angeordnete zweite Hauptfläche umfasst;
- Bringen der ersten Hauptfläche jedes der mehreren flachen Backprodukte aus einer im Wesentlichen horizontalen Ausgangsstellung in eine im Wesentlichen vertikale Neigeposition;
- alternativ Neigen der flachen Backprodukte um eine Drehachse, die sich parallel zur Transportrichtung erstreckt;
- wobei der Schritt des Neigens derart durchgeführt wird, dass die mehreren flachen Backprodukte mittels eines aktiven Schubs, der auf die erste Hauptfläche aus einer Querrichtung zur Transportrichtung aufgebracht wird, von der Neigeposition in eine Endstellung, in der die in der Reihe angeordneten flachen Backprodukte nacheinander mit der ersten Hauptfläche und der zweiten Hauptfläche nach unten geleitet werden, sodass die in der Reihe angeordneten flachen Backprodukte in Bezug zur Ausgangsstellung abwechselnd gewendet werden, und wobei die Neigeeinrichtung eine Luftstromeinrichtung umfasst, die eine Düse aufweist, um die mehreren flachen Backprodukte mittels eines Luftstrahls zu neigen.

14. Verfahren nach Anspruch 13, wobei der Schritt des Neigens derart durchgeführt wird, dass die in der Reihe angeordneten flachen Backprodukte bis zur Endstellung, in der zwei aufeinanderfolgende flache Backprodukte mit der ersten Hauptfläche nach unten geleitet werden und die nachfolgenden zwei flachen Backprodukte mit der zweiten Hauptfläche nach unten geleitet werden, oder wobei drei aufeinanderfolgende flache Backprodukte mit der ersten Hauptfläche nach unten geleitet werden und die nachfolgenden drei flachen Backprodukte mit der zweiten Hauptfläche nach unten geleitet werden, abwechselnd geneigt werden.

## Revendications

1. Dispositif de mise en rotation (1) pour mettre en rotation en alternance des produits de boulangerie plats, comprenant :
- un moyen de transport (2, 3) ayant une direction de transport T pour transporter une pluralité de produits de boulangerie plats B dans la direction de transport, dans lequel chacun de la pluralité de produits de boulangerie plats comprend une première surface principale (41) et une deuxième surface principale située à l'opposé de cette dernière, (42)
et dans lequel la pluralité de produits de boulangerie plats sont configurés selon une rangée (4a, 4b), la direction longitudinale de la rangée étant alignée avec la direction de transport ;
- un moyen de positionnement (61) pour amener la première surface principale de chacun de ladite pluralité de produits de boulangerie plats d'une situation de départ sensiblement horizontale à une position d'inclinaison sensiblement verticale, dans lequel chacun de ladite pluralité de produits de boulangerie plats tourne autour d'un axe de rotation qui est parallèle à la direction de transport du moyen de transport ;
comprenant en outre :
- un moyen d'inclinaison (50) pour incliner en alternance, dans ladite rangée, au moyen d'une poussée active devant être appliquée sur la première surface principale à partir d'une direction transversale à la direction de transport, ladite pluralité de produits de boulangerie plats agencés dans la rangée à partir de la position d'inclinaison à une situation finale dans laquelle les produits plats agencés dans la rangée sont successivement dirigés vers le bas avec la première surface principale et la deuxième surface principale, de sorte que les produits de boulangerie plats agencés dans ladite rangée soient mis en rotation en alternance par rapport à la situation de départ, et dans lequel ledit moyen d'inclinaison comprend un moyen de flux d'air ayant une buse (52) pour incliner la pluralité de produits de boulangerie plats au moyen d'un flux d'air.

2. Dispositif de mise en rotation selon la revendication 1, dans lequel le moyen de transport comprend en outre :
- une pluralité de transporteurs (33) pour transporter la pluralité de produits de boulangerie plats dans la direction de transport ;
- un moyen de commande pour commander de manière individuelle les transporteurs, dans lequel les vitesses des transporteurs peuvent être adaptées indépendamment les unes des autres ; et
- un chemin de transport (32) pour entraîner les transporteurs le long du chemin de transport.

3. Dispositif de mise en rotation selon la revendication 2, dans lequel les transporteurs sont agencés pour s'engager avec les produits de boulangerie plats d'un côté, à partir d'une direction transversale à la direction de transport, au niveau de la surface de transport.

4. Dispositif de mise en rotation selon la revendication 2 ou 3, dans lequel les transporteurs sont agencés pour s'engager avec les produits de boulangerie plats par-dessus.

5. Dispositif de mise en rotation selon les revendications 2 à 4, dans lequel les transporteurs sont agencés pour s'engager avec le flux de produits de boulangerie plats vers le haut du moyen de positionnement.

6. Dispositif de mise en rotation selon les revendications 2 à 5, dans lequel les transporteurs sont agencés pour s'engager avec le flux de produits de boulangerie plats vers le bas du moyen d'inclinaison.

7. Dispositif de mise en rotation selon les revendications 2 à 6, dans lequel les transporteurs sont agencés pour transporter les produits de boulangerie plats à travers les moyens de positionnement et d'inclinaison.

8. Dispositif de mise en rotation selon les revendications 2 à 7, dans lequel les transporteurs sont agencés pour transporter les produits de boulangerie plats à travers l'ensemble du dispositif de mise en rotation.

9. Dispositif de mise en rotation selon l'une quelconque des revendications précédentes, comprenant des premier et deuxième éléments de support, (10) qui s'étendent dans la direction de transport, pour supporter les produits de boulangerie plats, entre les premier et deuxième éléments de support, entre la position d'inclinaison et la situation finale.

10. Dispositif de mise en rotation selon l'une quelconque des revendications précédentes, dans lequel le moyen de transport comprend une surface de transport pour transporter la pluralité de produits de boulangerie plats dans la direction de transport le long de la surface de transport.

11. Dispositif de mise en rotation selon la revendication 9, dans lequel les premier et deuxième éléments de support comprennent un plan supérieur, (63) dans lequel une distance est formée entre le plan supérieur et la surface de transport, et dans lequel la distance diminue jusqu'à la situation finale, dans laquelle la pluralité de produits de boulangerie plats dans la situation finale ne sont pas supportés par les premier et deuxième éléments de support.

12. Dispositif de mise en rotation selon la revendication 11, dans lequel la buse est agencée à la position d'inclinaison à une distance par rapport à la surface de transport qui est supérieure à la distance entre le plan supérieur du premier élément de support et la surface de support.

13. Procédé pour mettre en rotation en alternance des produits de boulangerie plats comprenant les étapes consistant :
à transporter, dans une direction de transport, une pluralité de produits de boulangerie plats configurés dans une seule rangée, dans lequel chacun de la pluralité de produits de boulangerie plats comprend une première surface principale, et une deuxième surface principale située à l'opposé ;
- à amener la première surface principale de chacun de ladite pluralité de produits de boulangerie plats d'une situation de départ sensiblement horizontale à une position d'inclinaison sensiblement verticale ;
- à incliner en alternance les produits de boulangerie plats autour d'un axe de rotation qui s'étend parallèlement à la direction de transport ;
- dans lequel l'étape d'inclinaison est effectuée de sorte que ladite pluralité de produits de boulangerie plats soient inclinés en alternance, au moyen d'une poussée active devant être appliquée sur la première surface principale d'une direction transversale à la direction de transport, à partir de la position d'inclinaison à une situation finale dans laquelle les produits de boulangerie plats agencés dans la rangée sont successivement dirigés vers le bas avec la première surface principale et la deuxième surface principale, de sorte que les produits de boulangerie plats dans la rangée soient mis en rotation en alternance par rapport à la situation de départ et dans lequel ledit moyen d'inclinaison comprend un moyen de flux d'air ayant une buse pour incliner la pluralité de produits de boulangerie plats au moyen d'un flux d'air.

14. Procédé selon la revendication 13, dans lequel l'étape d'inclinaison est réalisée de sorte que les produits de boulangerie plats dans la rangée soient inclinés en alternance vers la situation finale dans laquelle successivement deux produits de boulangerie plats sont dirigés vers le bas avec la première surface principale et les deux produits de boulangerie plats suivants sont dirigés vers le bas avec la deuxième surface principale, ou dans laquelle successivement trois produits de boulangerie plats sont dirigés vers le bas avec la première surface principale et les trois produits de boulangerie plats suivants sont dirigés vers le bas avec la deuxième surface principale.
